# EUROPEAN PATENT SPECIFICATION

(11) **EP 3 486 625 B1**
(45) Date of publication and mention of the grant of the patent: **07.09.2022**
(21) Application number: 18206098.8
(22) Date of filing: 14.11.2018
(51) Int. Cl.: G01K 1/16

(54) **HEAT CONDUCTIVE ASSEMBLY AND TEMPERATURE MEASURING DEVICE**
WÄRMELEITANORDNUNG UND TEMPERATURMESSVORRICHTUNG
ENSEMBLE CONDUCTEUR DE CHALEUR ET DISPOSITIF DE MESURE DE TEMPÉRATURE

(30) Priority: 17.11.2017 CN 201711145738
(43) Date of publication of application: 22.05.2019
(73) Proprietor: Tyco Electronics (Shanghai) Co. Ltd., Shanghai Guangdong (CN)
(72) Inventor: SUN, Pengcheng, Shanghai, 200233 (CN)
(74) Representative: Grünecker Patent- und Rechtsanwälte PartG mbB

(56) References cited:
- EP-A1- 0 547 750
- US-A- 6 159 386

## Description

### TECHNICAL FIELD

The present disclosure relates to a structure for transferring heat, and more particularly, to a heat conductive assembly capable of transferring heat to a temperature measuring component, and a temperature measuring device.

### BACKGROUND

In the case of temperature measurement, corresponding heat is generally required to be converted into a corresponding signal to produce a corresponding temperature value. Therefore, heat is required to be transferred to a temperature measuring component. How to rapidly transfer heat to a temperature measuring component plays a crucial role in increasing the response speed of the temperature measuring component.

Document EP 0 547 750 A1 relates to a temperature sensor is shown which is composed of a metal substrate, an electrically insulating substrate and a further metallic substrate. The electrically insulating substrate layer comprises thermally-conducting particles of aluminum or the like and the top metal sheet layer provides different pairs of metal pads on which the temperature sensor may be received.

Document US 6,159,386 A concerns the measurement of the temperature of a gas atmosphere via a bridge-like conductive path, which is spanned above a recess provided in a ceramic substrate. At the ends of the conductor path, connection contact fields are provided.

### SUMMARY OF THE INVENTION

One of the objectives of the present disclosure is to provide a heat conductive assembly simple in structure and fast in heat transfer, and a temperature measuring device to overcome the drawbacks existing in the prior art.

According to one aspect of the disclosure, there is provided a heat conductive assembly for transferring heat from an object to be measured to a temperature measuring component. The heat conductive assembly of the invention is defined in claim 1. The heat conductive assembly comprises a thermally conductive substrate having an upper surface and a lower surface. The lower surface of the thermally conductive substrate is adapted to contact the object to be measured. The thermally conductive substrate is configured to be electrically insulating. An electrically conductive layer is fixedly disposed on the upper surface of the thermally conductive substrate. The electrically conductive layer comprises a pair of supporting connection portions that are disposed spaced apart from each other and a pair of output connection portions. A supporting connection portion and an output connection portion are connected to each other. The other supporting connection portion and the other output connection portion are connected to each other. Each of the supporting connection portions is adapted to support a temperature measuring component, and to be electrically connected to and be in thermally conductive contact with the temperature measuring component. The output connection portions are adapted to be electrically connected to a corresponding pair of connectors configured to output a signal sensed by the temperature measuring component. The upper surface of the thermally conductive substrate has a recess, and a portion of the electrically conductive layer is filled into the recess.

In an embodiment of the heat conductive assembly, at least one of the thermally conductive substrate and the electrically conductive layer has a uniform thickness. In some embodiments of the heat conductive assembly, the thermally conductive substrate is a ceramic plate. Preferably, the thermally conductive substrate is made from an aluminum nitride material.

In one embodiment of the heat conductive assembly, the electrically conductive layer has a thickness smaller than that of the thermally conductive substrate. In another embodiment of the heat conductive assembly, the electrically conductive layer comprises at least one of a physical vapor deposited structure, a metal screen printed structure and a metal slurry solidified structure. Preferably, the electrically conductive layer is a physical vapor deposited layer. In yet another embodiment of the heat conductive assembly, a pair of the supporting connection portions are disposed to be spaced apart from each other, and are adapted to be electrically connected with the temperature measuring component, respectively.

The heat conductive assembly as described in any of the above embodiments further comprises a metal connection layer disposed on the electrically conductive layer, characterized in that the electrically conductive layer and the metal connection layer are made from different metal materials. In one embodiment, the metal connection layer has a resistivity smaller than that of the electrically conductive layer. In another embodiment, the metal connection layer is an electroplated structure.

According to a second aspect of the disclosure, there is provided a temperature measuring device as defined in claim 6. The temperature measuring device comprises the heat conductive assembly according to any one of the foregoing embodiments, and a temperature measuring component. The temperature measuring component is disposed on the upper surface of the thermally conductive substrate and electrically connected with the supporting connection portions. In one embodiment of the temperature measuring device, the temperature measuring component is disposed to be in thermally conductive contact with the heat conductive assembly. In another embodiment of the temperature measuring device, the temperature measuring component is fixedly connected with the supporting connection portions. In yet another embodiment of the temperature measuring device, the temperature measuring component is a patch component.

In some embodiments, the temperature measuring device further comprises a pair of connectors. An end of the each of the connectors is adapted to be in a contact electrical connection to the corresponding output connection portion and to output a signal sensed by the temperature measuring component. In one embodiment, the end of the connector is fixedly connected with the corresponding output connection portion.

In some other embodiments, the temperature measuring device further comprises a retaining housing. The retaining housing has a chamber wall. The chamber wall together with the thermally conductive substrate encloses a chamber adapted to contain a filling component, and at least a portion of the temperature measuring component is disposed within the chamber. In one embodiment, an inner surface of the chamber wall is provided with a limiting groove, and a portion of the thermally conductive substrate is contained within the limiting groove. In another embodiment, the retaining housing is provided with guiding through-holes, which are disposed to extend through the chamber wall and to be in communication with the chamber. The temperature measuring device further comprises a pair of connectors. An end of each of the connectors is adapted to pass through the guiding through-holes and to be in a contact electrical connection to the corresponding output connection portion, and another end of the connector is adapted to output a signal sensed by the temperature measuring component. In yet another embodiment, the retaining housing further comprises a reinforcement arm. The reinforcement arm is disposed to extend from the inner surface of the chamber wall for supporting a filling component. In still another embodiment, the reinforcement arm separates the chamber into at least two sub-chambers.

The temperature measuring device as described in any of the above embodiments further comprises a filling component adapted to be filled into the chamber. As an alternative embodiment, the filling component is a photosensitive gel cured structure or a silicone cured structure.

As compared with the prior art, the thermally conductive substrate according to the present disclosure provides support for the conductive layer, and transfers heat thereto. The conductive layer can help achieve an electrical connection and thermally conductive contact with the temperature measuring component with a simple structure and a small amount of heat required for heating, so that the temperature measuring component can exhibit a rapid overall temperature measuring speed. In other words, the temperature measuring device exhibits a rapid response speed. Accordingly, the simple manufacturing of the heat conductive assembly with unified specifications can enable the overall response speed of temperature measurement to be consistent.

### BRIEF DESCRIPTION OF THE DRAWINGS

Figure 1 is a schematic structural perspective view of a heat conductive assembly according to the present disclosure.
Figure 2 is a partial sectional view of the heat conductive assembly of Figure 1 provided with a metal connection layer.
Figure 3 is a schematic structural perspective view of a temperature measuring device according to the present disclosure.
Figure 4 is a schematic projection view of the temperature measuring device of Figure 3 provided with a retaining housing and a connector.
Figure 5 is a sectional view of the temperature measuring device of Figure 4 along E-E.
Figure 6 is a schematic structural perspective view of the retaining housing in Figure 4 showing top openings.
Figure 7 is a schematic structural perspective view of the retaining housing in Figure 6 showing bottom openings.
Figure 8 is a schematic structural perspective view of the temperature measuring device of Figure 4 provided with a filling component.
Figure 9 is a schematic projection view of the temperature measuring device of Figure 8.

### DETAILED DESCRIPTION OF EMBODIMENTS

The present disclosure will be described below in detail with reference to the accompanying drawings.

### Embodiment 1

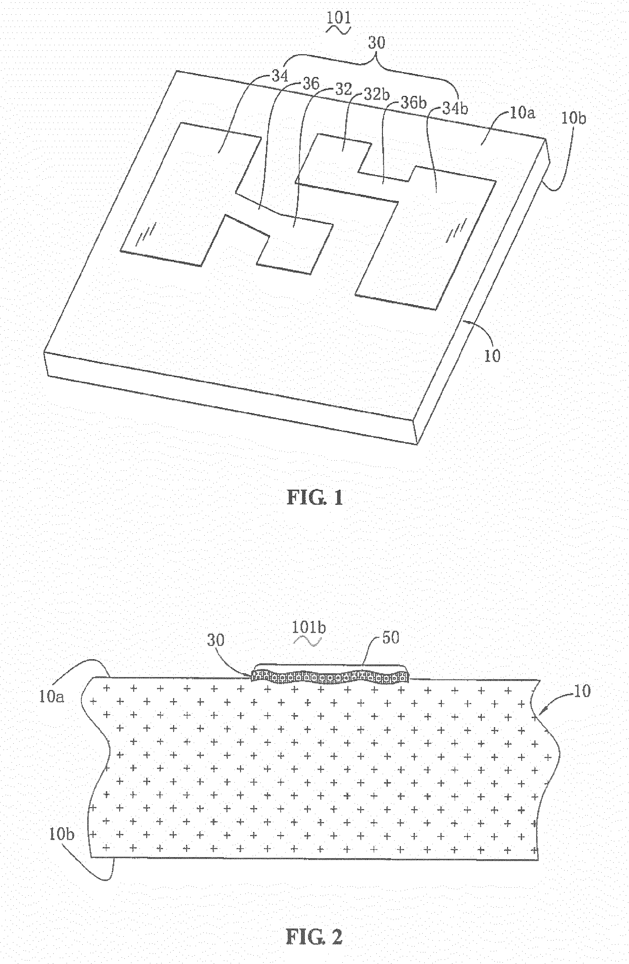

With reference to Figures 1 and 2, the present disclosure provides a heat conductive assembly 101. The heat conductive assembly 101 may be adapted to transfer heat of an object to be measured (not shown in the figure) to a temperature measuring component 200. The heat conductive assembly 101 may comprise a thermally conductive substrate 10. An electrically conductive layer 30 may be disposed on an upper surface 10a of the thermally conductive substrate 10.

The thermally conductive substrate 10 has the upper surface 10a and a lower surface 10b. The lower surface 10b of the thermally conductive substrate 10 may be adapted to be in contact with the object to be measured. The thermally conductive substrate 10 may be adapted to transfer heat of the object to be measured to the electrically conductive layer 30. The specific shape and configuration of the thermally conductive substrate 10 may be selected as required. To improve the universality and facilitate the sensing of the stability of an electronic part, the thermally conductive substrate 10 may be configured to be made from electrically insulating materials. To improve the heat conductive performance of the thermally conductive substrate 10, the thermally conductive substrate 10 may be a ceramic plate. More specifically, the thermally conductive substrate 10 may be aluminum nitride (with a chemical formula: AlN). Accordingly, the thermally conductive substrate 10 can greatly increase the heat conduction speed, thereby shortening the response time of the temperature measuring component 200. To improve the stability of the connection between the thermally conductive substrate 10 and the electrically conductive layer 30, and increase the heat conduction speed, the upper surface 10a of the thermally conductive substrate 10 may be provided with a recess. In other words, the upper surface 10a of the thermally conductive substrate 10 has a degree of roughness. As a preferred embodiment, the thermally conductive substrate 10 has such a uniform and consistent thickness that all of the mass-produced thermally conductive substrates 10 can be ensured to be consistent in the heat conductive performance, so that the temperature measuring performance can be ensured to be consistent whenever the electrically conductive layer 30 comes into contact with any part of the upper surface 10a of the thermally conductive substrate 10.

The electrically conductive layer 30 may be adapted to achieve an electrical connection between the temperature measuring component 200 and a connector 204, and to transfer heat to the temperature measuring component 200. The electrically conductive layer 30 may be fixedly disposed on the upper surface 10a of the thermally conductive substrate 10. Accordingly, the electrically conductive layer 30 may be disposed to be inseparable from the thermally conductive substrate 10. The electrically conductive layer 30 may comprise a supporting connection portion 32 and an output connection portion 34 connected to each other. The supporting connection portion 32 may be adapted to support the temperature measuring component 200. The supporting connection portion 32 may be in direct contact with the temperature measuring component 200, and may be in electrically conductive and thermally conductive connection therewith. The specific shape and configuration of the supporting connection portion 32 are only required to be able to achieve corresponding supporting. In this embodiment, to increase the contact area between the supporting connection portion 32 and the upper surface 10a of the thermally conductive substrate 10, the supporting connection portion 32 may be substantially plate-shaped. To maximize material saving and increase the heat conduction speed, the shape of the supporting connection portion 32 may be substantially identical to that of the bottom surface of the temperature measuring component 200. Specifically, the supporting connection portion 32 may be rectangular-shaped. In this embodiment, to save materials and reduce the substance required to be heated to a sensed temperature to increase the heat conduction speed, a pair of supporting connection portions 32 and 32b may be disposed to be spaced apart from each other, and may be electrically connected with one corresponding temperature measuring component 200.

The output connection portion 34 may be connected with the supporting connection portion 32. Further, to improve the heat conductive performance, the electrically conductive layer 30 may be an integrated unit. The output connection portion 34 may be adapted to output a signal sensed by the temperature measuring component 200 to a connector 204 described below. The specific shape and configuration of the output connection portion 34 are only required to be able to achieve a corresponding electrical connection. Preferably, to increase the heat conduction speed of the conductive layer 30, the output connection portion 34 may be disposed to be in contact with the upper surface 10a of the thermally conductive substrate 10. To sufficiently reduce the volume of the output connection portion 34 so as to increase the heat conduction speed, and to ensure the stability of the connection between the output connection portion 34 and a corresponding connector 200, the output connection portion 34 may be substantially rectangular plate-shaped. In this embodiment, to facilitate transmission of corresponding signals, a pair of output connection portions 34 and 34b may be connected with a corresponding pair of connectors 204 and 204b, respectively, thereby forming an electrically connected loop.

A connection arm 36 may be connectively arranged between the output connection portion 34 and the supporting connection portion 32, such that there is sufficient space between the temperature measuring component 200 and the connector 205. Two ends of the connection arm 36 may be connected with the output connection portion 34 and the supporting connection portion 32, respectively. The specific shape and configuration of the connection arm 36 are only required to be able to achieve a corresponding electrical connection. Specifically, the connection arm 36 may be substantially plate-shaped. To increase the heat conduction speed, the connection arm 36 may have a volume smaller than those of the output connection portion 34 and the supporting connection portion 32. In this embodiment, the connection arm 36 connects correspondingly the output connection portion 34 with the supporting connection portion 32; a connection arm 36b connects correspondingly the output connection portion 34b with the supporting connection portion 32b. Preferably, the connection arm 36, the output connection portion 34 and the supporting connection portion 32 are connected together to form an integrated structure. The connection arm 36b, the output connection portion 34b and the supporting connection portion 32b are connected together to form another integrated structure.

The electrically conductive layer 30 may be manufactured from any electrically conductive materials. In this embodiment, the electrically conductive layer 30 is made from metal materials. For example, the electrically conductive layer 30 may be formed by copper or aluminum materials. To improve the stability of the connection between the electrically conductive layer 30 and the thermally conductive substrate 10 and increase the heat conduction speed, the electrically conductive layer 30 may be a physical vapor deposition (PVD for short) structure. In other words, the electrically conductive layer 30 may be connected integrally with the upper surface 10a of the thermally conductive substrate 10 by means of physical vapor deposition. As another preferred embodiment, the electrically conductive layer 30 may be a metal screen printed structure. In other words, the electrically conductive layer 30 may be formed by applying a metal slurry to the upper surface 10a of the thermally conductive substrate 10 by means of screen printing and forming a corresponding solidified structure. As yet another preferred embodiment, the electrically conductive layer 30 may be a metal slurry solidified structure. In other words, the electrically conductive layer 30 may be formed by applying a slurry-like metal material to the upper surface 10a of the thermally conductive substrate 10 and connecting integrally with the upper surface 10a of the thermally conductive substrate 10 by solidification. When required, the metal slurry may be formed into a solidified structure by means of high-temperature sintering. As a preferred embodiment, the electrically conductive layer 30 has such a uniform and consistent thickness that the temperature measuring performance can be ensured to be consistent whenever the temperature measuring component 30 comes into contact with any part of the upper surface of the electrically conductive layer 30. To increase the heat conduction speed, the electrically conductive layer 30 may have a thickness smaller than that of the thermally conductive substrate 10.

### Embodiment 2:

With reference to Figure 2, to further reduce thermal and electrical resistances so as to increase the response speed of the temperature measuring component 200, the present disclosure provides a heat conductive assembly 101b. As compared with Embodiment 1, the heat conductive assembly 101b also comprises a metal connection layer 50. The metal connection layer 50 is disposed on the electrically conductive layer 30.

The metal connection layer 50 may be adapted to be in a direct contact electrical connection to the temperature measuring component 200, and to transfer heat. Preferably, to further increase the response speed of the temperature measuring component 200, the metal connection layer 50 may have a smaller thermal and/or electrical resistance than the electrically conductive layer 30. Further, to improve the stability of the connection between the metal connection layer 50 and the electrically conductive layer 30, and increase the heat conduction speed, the metal connection layer 50 may be a metal plating layer. In other words, the metal connection layer 50 may be a metallic electrically conductive structure laid onto the electrically conductive layer 30 by means of metal plating. To improve corrosion resistance, the metal connection layer 50 may be made from metal materials such as gold or silver, etc.

### Embodiment 3:

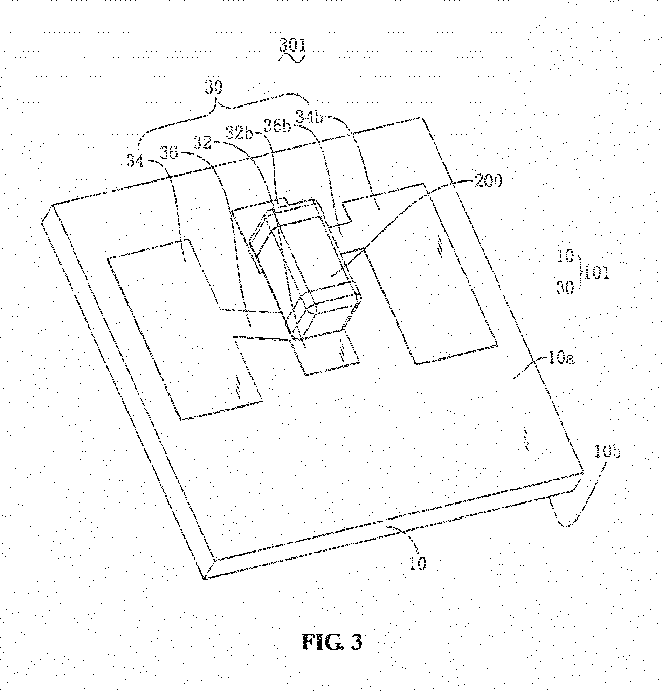

With reference to Figure 3, the present disclosure also provides a temperature measuring device 301. The temperature measuring device 301 comprises the heat conductive assembly 101 as recited above in Embodiment 1 and a temperature measuring component 200. The temperature measuring component 200 may be disposed on the heat conductive assembly 101 to sense the temperature of an object to be measured through the heat transferred by the heat conductive assembly 101. Further, the heat conductive assembly 101 (or 101b) may be disposed to be in thermally conductive contact with the temperature measuring component 200. As a preferred embodiment, the temperature measuring device 301 may be adapted to measure the temperature of a solid, and exhibit an extremely fast response speed.

The temperature measuring component 200 may be disposed on an upper surface 10a of the thermally conductive substrate 10. The temperature measuring component 200 may be electrically connected with the supporting connection portion 32. Preferably, a portion of the temperature measuring component 200 may be disposed on the supporting connection portion 32, and also adapted to be in a contact electrical connection to the supporting connection portion 32. Further, the temperature measuring component 200 may be adapted to be in thermally conductive contact with the supporting connection portion 32. Still further, the temperature measuring component 200 may be fixedly connected with the supporting connection portion 32. Specifically, the temperature measuring component 200 may be connected with the supporting connection portion 32 by means of welding. To sufficiently save space and facilitate assembly, the temperature measuring component 200 may be a patch component. Based on requirements of temperature measurement, the temperature measuring component 200 may be a thermistor. More specifically, the temperature measuring component 200 may be a negative temperature coefficient (NTC for short) thermistor or a positive temperature coefficient (PTC for short) thermistor.

### Embodiment 4:

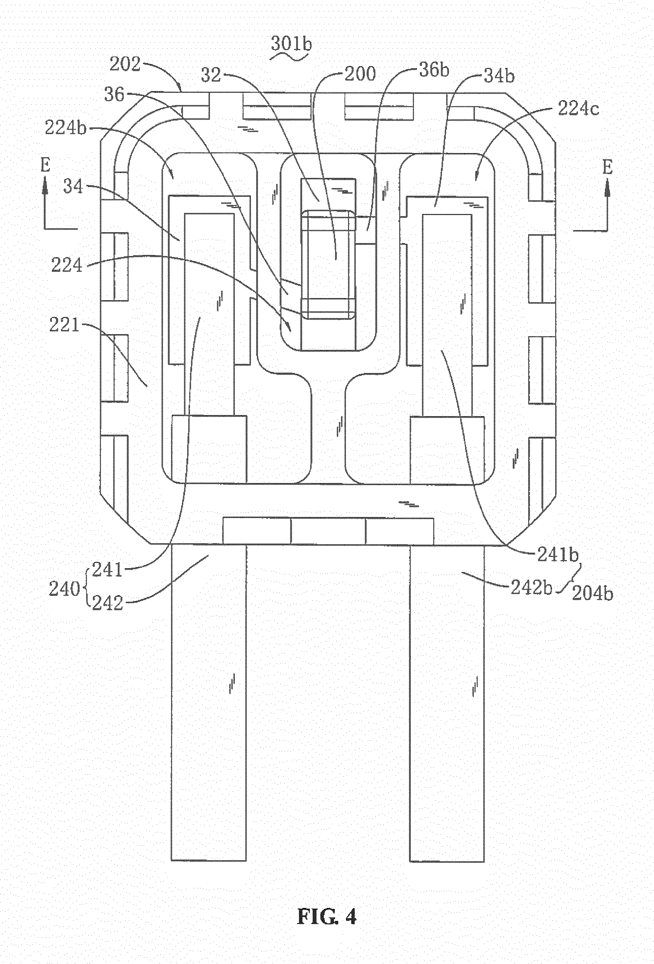

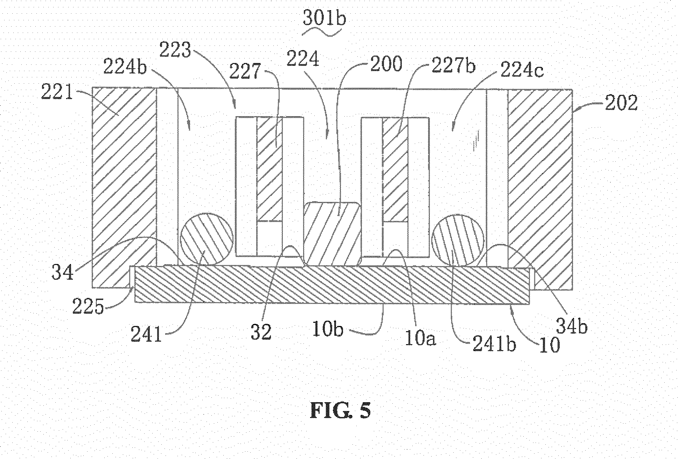

With reference to Figures 4 and 5, to facilitate improvements on the overall performance of the temperature measuring device 301, the present disclosure provides yet another temperature measuring device 301b. As compared with the foregoing temperature measuring device 301, the temperature measuring device 301b also comprises a retaining housing 202.

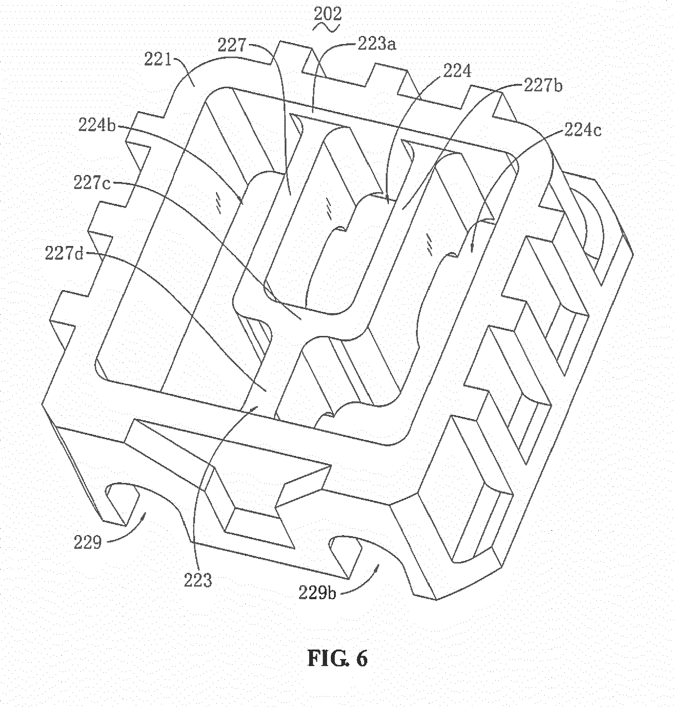

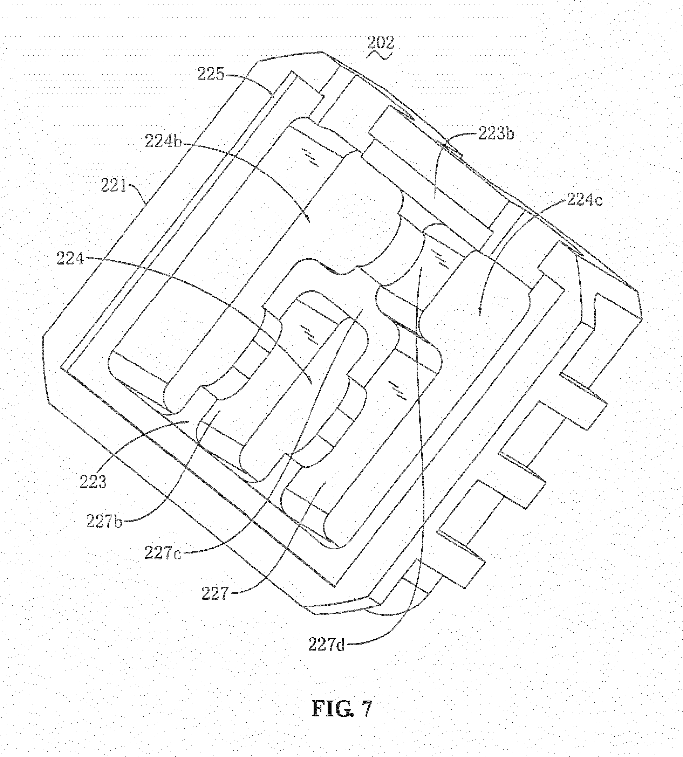

With reference to Figures 6 and 7 together, the retaining housing 202 has a chamber wall 221. The chamber wall 221 encloses to form a chamber 223. Specifically, the chamber wall 221 together with the thermally conductive substrate 10 encloses the chamber 223. The chamber 223 may be adapted to contain a filling component 206 described below. The chamber 223 may be adapted to contain at least a portion of the temperature measuring component 200.

To facilitate the mounting of the filling component 206 described below, the chamber 223 may be a tubular chamber. In other words, the chamber 223 may extend through the retaining housing 202 in a vertical direction. Accordingly, the chamber 223 may have a top opening 223a and a bottom opening 223b that are formed on the chamber wall 221. The top opening 223a may be adapted to contain the filling component 206 described below. The bottom opening 223b may be adapted to contain a portion of the thermally conductive substrate 10.

To further stably retain the thermally conductive substrate 10, and facilitate the correct and rapid assembly of the thermally conductive substrate 10, a limiting groove 225 may be disposed on an inner surface of the chamber wall 221. The limiting groove 225 may be adapted to contain and retain the thermally conductive substrate 10 so that the thermally conductive substrate 10 can also be prevented from completely falling down into the chamber 223. To further facilitate the correct and rapid assembly of the thermally conductive substrate 10 into the limiting groove 225, the limiting groove 225 may be a rectangular groove. Accordingly, the thermally conductive substrate 10 may be a rectangular plate. To further improve the stability of assembly of the thermally conductive substrate 10 to the retaining housing 202, the thermally conductive substrate 10 may achieve an interference fit with the limiting groove 225. In other words, the thermally conductive substrate 10 may achieve an abutting fit with the groove wall of the limiting groove 225. Based on application requirements, the thermally conductive substrate 10 may also achieve an abutting fit with the chamber wall 221.

To improve the stability of retention of the filling component 206 described below by the retaining housing 202, and reduce the negative influence exerted on other parts by the filling component 206 as a result of deformation caused by changes in temperature difference, the retaining housing 202 may also comprise a reinforcement arm 227. The reinforcement arm 227 may be disposed to extend from the inner surface of the chamber wall 221, to support the filling component 206 and to enhance the overall strength of the retaining housing 202. The specific shape and configuration of the reinforcement arm 227 may be selected as required. Further, both ends of the reinforcement arm 227 may be connected with the inner surface of the chamber wall 221. Preferably, the reinforcement arm 227 may separate the chamber 223 into at least two sub-chambers 224. The number and distribution of the reinforcement arm 227 may be selected as required. In this embodiment, four reinforcement arms 227, 227b, 227c and 227d separate the chamber 223 into three sub-chambers 224, 224b and 224c. Specifically, the three reinforcement arms 227, 227b and 227c together with the chamber wall 221 enclose a sub-chamber 224 capable of surrounding the temperature measuring component 200. The other reinforcement arm 227d is connected with the reinforcement arm 227c and the chamber wall 221, respectively, thereby forming two separate sub-chambers 224b and 224c. The two sub-chambers 224b and 224c are "L"-shaped and symmetric to each other. To help fill the filling component 206 described below, the sub-chambers 224, 224b and 224c may be disposed to be in communication with one another.

To facilitate the extension of the connector 204 described below, the chamber wall 221 may be provided with a guiding through-hole 229. The guiding through-hole 229 may be disposed to extend through the chamber wall 221 and to be in communication with the chamber 223. In this embodiment, two guiding through-holes 229 and 229b are disposed to extend parallelly to guide the two connectors 204 and 204b described below.

To help output the temperature signal sensed by the temperature measuring component 200, the temperature measuring device 101 may also comprise a connector 204. An end 241 of the connector 204 may be adapted to be in a contact electrical connection to the output connection portion 34 so that a signal sensed by the temperature measuring component 200 can be output. Specifically, the end 241 of the connector 204 may be connected with the output connection portion 34 by means of welding. Accordingly, the end 241 of the connector 204 may be fixedly connected with the output connection portion 34. The other end 242 of the connector 204 may be adapted to output a sensed signal sensed by the temperature measuring component 200. The specific shape and specifications of the connector 204 can be selected as required as long as a corresponding electrical connection can be achieved. In this embodiment, the connector 204 may be a metal wire. Further, the metal wire may be an enamel-covered wire; alternatively, the metal wire may be provided with an insulating sheath to improve security. In this embodiment, the respective ends 241 and 241b of two connectors 204 and 204b are adapted to be in a contact electrical connection to the corresponding output connection portions 34 and 34b, respectively. The other respective ends 242 and 242b of the two connectors 204 and 204b are adapted to pass through two corresponding guiding through-holes 229 and 229b, respectively, and to extend to the outside of the retaining housing 202.

### Embodiment 5:

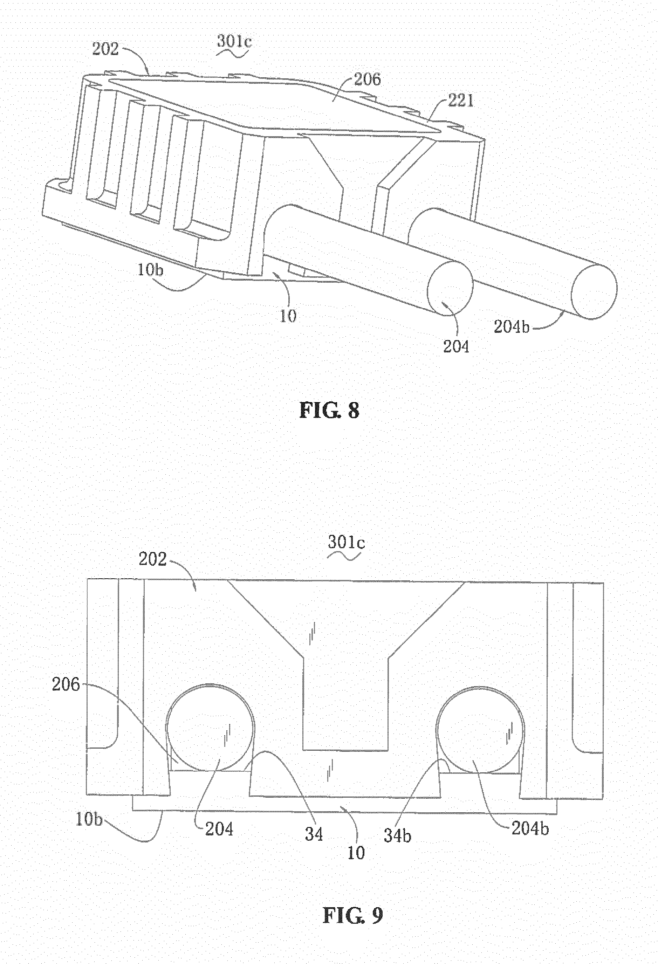

With reference to Figures 8 and 9, to improve the protection for corresponding devices within the chamber 223, the present disclosure further provides another temperature measuring device 301c. As compared with the foregoing temperature measuring device 301b, the temperature measuring device 301c also comprises a filling component 206. The filling component 206 is filled within the chamber 223 of the retaining housing 202. The filling component 206 can provide protections such as electrical insulation and watertightness for the temperature measuring component 200 and the heat conductive assembly 101. The specific material and specifications of the filling component 206 are only required to enable corresponding filling. The filling component 206 may be a silicone cured structure. In other words, a corresponding integrated structure may be formed by injecting molten silicone into the chamber 223 and curing. In this embodiment, the filling component 206 is a photosensitive gel. The photosensitive gel (also referred to as UV gel) is a cured structure formed by irradiating by ultraviolet light.

It should be noted that the term "thickness" as used in the present disclosure refers to an extension dimension in a vertical direction, unless specifically indicated otherwise. In addition, the terms "upper, lower;" "left, right;" "front, rear;" and "one, another one" as used in the present disclosure all are relative concepts, and intended to facilitate understanding of relative positions of various parts with reference to the figures. Herein, the terms "upper, lower" may refer to the vertical direction as shown in Figure 9.

What have been described above are merely preferred embodiments of the present disclosure, and are not intended to limit the scope of the present disclosure. Any modifications, equivalents or improvements within the present disclosure shall be covered by the scope of the claims of the present disclosure.

## Claims

1. A heat conductive assembly (101, 101b) for transferring heat of an object to be measured to a temperature measuring component (200), wherein the heat conductive assembly (101, 101b) comprises:
a thermally conductive substrate (10) having an upper surface (10a) and a lower surface (10b), wherein the lower surface (10b) of the thermally conductive substrate (10) is adapted to contact the object to be measured, wherein the thermally conductive substrate (10) is configured to be electrically insulating, and
an electrically conductive layer (30) fixedly disposed on the upper surface (10a) of the thermally conductive substrate (10); and
the electrically conductive layer (30) comprises a pair of supporting connection portions (32, 32b) that are disposed spaced apart from each other and a pair of output connection portions (34, 34b), wherein one of the supporting connection portions (32) and one of the output connection portions (34) are connected to each other, and wherein the other supporting connection portion (32b) and the other output connection portion (34b) are connected to each other;
each of the supporting connection portions (32, 32b) is adapted to support the temperature measuring component (200) and to be electrically connected to and be in thermally conductive contact with the temperature measuring component (200); and
the output connection portions (34, 34b) are adapted to be electrically connected to a corresponding pair of connectors (204, 204b) configured to output a signal sensed by the temperature measuring component (200), **characterized in that** the upper surface (10a) of the thermally conductive substrate (10) has a recess; and a portion of the electrically conductive layer (30) is filled into the recess.

2. The heat conductive assembly (101, 101b) of claim 1, **characterized in that** the thermally conductive substrate (10) is a ceramic plate.

3. The heat conductive assembly (101, 101b) of claim 1, **characterized in that** the electrically conductive layer (30) comprises at least one of a physical vapor deposited structure, a metal screen printed structure and a metal slurry solidified structure.

4. The heat conductive assembly (101, 101b) of any one of claims 1 to 3, **characterized in that** it further comprises a metal connection layer (50) disposed on the electrically conductive layer (30); and the electrically conductive layer (30) and the metal connection layer (50) are made from different metal materials.

5. The heat conductive assembly (101, 101b) of claim 4, **characterized in that** the metal connection layer (50) has a resistivity smaller than that of the electrically conductive layer (30).

6. A temperature measuring device (301, 301b), **characterized in that** it comprises the heat conductive assembly (101, 101b) of any of claims 1 to 5 and a temperature measuring component (200) disposed on the upper surface (10a) of the thermally conductive substrate (10) and electrically connected with the supporting connection portions (32, 32b).

7. The temperature measuring device (301, 301b) of claim 6, **characterized in that** the temperature measuring component (200) is disposed to be in thermally conductive contact with the heat conductive assembly (101, 101b).

8. The temperature measuring device (301, 301b) of claim 6, **characterized in that** it further comprises a pair of connectors (204, 204b), and an end (241, 241b) of each of the connectors (204, 204b) is adapted to be in a contact electrical connection to the corresponding output connection portion (34, 34b) and to output a signal sensed by the temperature measuring component (200).

9. The temperature measuring device (301, 301b) of claim 6, **characterized in that** it further comprises a retaining housing (202) having a chamber wall (221); the chamber wall (221) together with the thermally conductive substrate (10) encloses a chamber (223) adapted to accommodate a filling component (206); and at least a portion of the temperature measuring component (200) is disposed within the chamber (223).

10. The temperature measuring device (301, 301b) of claim 9, **characterized in that** an inner surface of the chamber wall (221) is provided with a limiting groove (225); and a portion of the thermally conductive substrate (10) is contained within the limiting groove (225).

11. The temperature measuring device (301, 301b) of claim 9, **characterized in that**
the retaining housing (202) is provided with guiding through-holes (229, 229b);
the guiding through-holes (229, 229b) are disposed to extend through the chamber wall (221) and to be in communication with the chamber (223); and
the temperature measuring device (301, 301b) further comprises a pair of connectors (204, 204b), **characterized in that**
an end (241, 241b) of each of the connectors (204, 204b) is adapted to pass through the guiding through-holes (229, 229b) and to be in a contact electrical connection to the corresponding output connection portion (34, 34b); and
another end (241b, 241) of the connector (204, 204b) is adapted to output a signal sensed by the temperature measuring component (200).

12. The temperature measuring device (301, 301b) of claim 9, **characterized in that** the retaining housing (202) further comprises a reinforcement arm (227, 227b, 227c, 227d); and the reinforcement arm (227, 227b, 227c, 227d) is disposed to extend from the inner surface of the chamber wall (221) for supporting a filling component (206).

13. The temperature measuring device of any one of claims 6 to 12, **characterized in that** it further comprises a filling component (206) adapted to be filled into the chamber (223).

14. The temperature measuring device of claim 13, **characterized in that** the filling component (206) is a photosensitive gel cured structure or a silicone cured structure.

## Patentansprüche

1. Wärmeleitende Anordnung (101, 101b) zum Übertragen von Wärme eines zu messenden Objektes zu einer Temperatur-Messkomponente (200), wobei die wärmeleitende Anordnung (101, 101b) umfasst:
ein wärmeleitendes Substrat (10) mit einer oberen Fläche (10a) und einer unteren Fläche (10b), wobei die untere Fläche (10b) des wärmeleitenden Substrats (10) so eingerichtet ist, dass sie mit dem zu messenden Objekt in Kontakt kommt, und das wärmeleitende Substrat (10) so ausgeführt ist, dass es elektrisch isolierend ist, sowie
eine elektrisch leitende Schicht (30), die fest an der oberen Fläche (10a) des wärmeleitenden Substrats (10) angeordnet ist; und
die elektrisch leitende Schicht (30) ein Paar tragender Verbindungsabschnitte (32, 32b), die voneinander beabstandet angeordnet sind, sowie ein Paar von Ausgangs-Verbindungsabschnitten (34, 34b) umfasst, wobei einer der tragenden Verbindungsabschnitte (32) und einer der Ausgangs-Verbindungsabschnitte (34) miteinander verbunden sind, und der andere tragende Verbindungsabschnitt (32b) und der andere Ausgangs-Verbindungsabschnitt (34b) miteinander verbunden sind;
jeder der tragenden Verbindungsabschnitte (32, 32b) so eingerichtet ist, dass er die Temperatur-Messkomponente (200) trägt und mit der Temperatur-Messkomponente (200) elektrisch verbunden sowie in wärmeleitendem Kontakt mit ihr ist; und
die Ausgangs-Verbindungsabschnitte (34, 34b) so eingerichtet sind, dass sie elektrisch mit einem entsprechenden Paar von Verbindern (204, 204b) verbunden sind, die so ausgeführt sind, dass sie ein von der Temperatur-Messkomponente (200) erfasstes Signal ausgeben, **dadurch gekennzeichnet, dass** die obere Fläche (10a) des wärmeleitenden Substrats (10) eine Vertiefung aufweist und ein Abschnitt der elektrisch leitenden Schicht (30) in die Vertiefung gefüllt ist.

2. Wärmeleitende Anordnung (101, 101b) nach Anspruch 1, **dadurch gekennzeichnet, dass** das wärmeleitende Substrat (10) eine Keramikplatte ist.

3. Wärmeleitende Anordnung (101) nach Anspruch 1, **dadurch gekennzeichnet, dass** die elektrisch leitende Schicht (30) eine im Vakuum aufgedampfte (physical vapor deposited) Struktur, eine Siebdruck-Struktur aus Metall oder/und eine verfestigte Struktur aus Metall-Aufschlämmung umfasst.

4. Wärmeleitende Anordnung (101, 101b) nach einem der Ansprüche 1 bis 3, **dadurch gekennzeichnet, dass** sie des Weiteren eine Metall-Verbindungsschicht (50) umfasst, die auf der elektrisch leitenden Schicht (30) angeordnet ist, und die elektrisch leitende Schicht (30) und die Metall-Verbindungsschicht (50) aus unterschiedlichen Metallmaterialien bestehen.

5. Wärmeleitende Anordnung (101, 101b) nach Anspruch 4, **dadurch gekennzeichnet, dass** die Metall-Verbindungsschicht (50) einen niedrigeren spezifischen Widerstand hat als die elektrisch leitende Schicht (30).

6. Temperatur-Messvorichtung (301, 301b), **dadurch gekennzeichnet, dass** sie die wärmeleitende Anordnung (101, 101b) nach einem der Ansprüche 1 bis 5 sowie eine Temperatur-Messkomponente (200) umfasst, die an der oberen Fläche (10a) des wärmeleitenden Substrats (10) angeordnet und elektrisch mit den tragenden Verbindungsabschnitten (32, 32b) verbunden ist.

7. Temperatur-Messvorichtung (301, 301b) nach Anspruch 6, **dadurch gekennzeichnet, dass** die Temperatur-Messkomponente (200) so angeordnet ist, dass sie in wärmeleitendem Kontakt mit der wärmeleitenden Anordnung (101, 101b) ist.

8. Temperatur-Messvorichtung (301, 301b) nach Anspruch 6, **dadurch gekennzeichnet, dass** sie des Weiteren ein Paar Verbinder (204, 204b) umfasst und ein Ende (241, 241b) jedes der Verbinder (204, 204b) so eingerichtet ist, dass es in einer elektrischen Kontaktverbindung mit dem entsprechenden Ausgangs-Verbindungsabschnitt (34, 34b) ist und ein von der Temperatur-Messkomponente (200) erfasstes Signal ausgibt.

9. Temperatur-Messvorichtung (301, 301b) nach Anspruch 6, **dadurch gekennzeichnet, dass** sie des Weiteren ein Halte-Gehäuse (202) mit einer Kammerwand (221) umfasst, die Kammerwand (221) zusammen mit dem wärmeleitenden Substrat (10) eine Kammer (223) umschließt, die zum Aufnehmen einer Füllkomponente (206) eingerichtet ist, und wenigstens ein Abschnitt der Temperatur-Messkomponente (200) im Inneren der Kammer (223) angeordnet ist.

10. Temperatur-Messvorichtung (301, 301b) nach Anspruch 9, **dadurch gekennzeichnet, dass** eine Innenfläche der Kammerwand (221) mit einer Begrenzungs-Nut (225) versehen ist und ein Abschnitt des wärmeleitenden Substrats (10) in der Begrenzungs-Nut (225) eingeschlossen ist.

11. Temperatur-Messvorichtung (301) nach Anspruch 9, **dadurch gekennzeichnet, dass**
das Halte-Gehäuse (202) mit führenden Durchgangslöchern (229, 229b) versehen ist;
die führenden Durchgangslöcher (229, 229b) so angeordnet sind, dass sie sich durch die Kammerwand (221) hindurch erstrecken und in Verbindung mit der Kammer (223) stehen; und
die Temperatur-Messvorrichtung (301, 301b) des Weiteren ein Paar Verbinder (204, 204b) umfasst, **dadurch gekennzeichnet, dass**
ein Ende (241, 241b) jedes der Verbinder (204, 204b) so eingerichtet ist, dass es durch die führenden Durchgangslöcher (229, 229b) hindurchtritt und in einer elektrischen Kontaktverbindung mit dem entsprechenden Ausgangs-Verbindungsabschnitt (34, 34b) ist; und
ein anderes Ende (241b, 241) des Verbinders (204, 204b) zum Ausgeben eines von der Temperatur-Messkomponente (200) erfassten Signals eingerichtet ist.

12. Temperatur-Messvorichtung (301, 301b) nach Anspruch 9, **dadurch gekennzeichnet, dass** das Halte-Gehäuse (202) des Weiteren einen Verstärkungs-Arm (227, 227b, 227c, 227d) umfasst und der Verstärkungs-Arm (227, 227b, 227c, 227d) so angeordnet ist, dass er sich von der Innenfläche der Kammerwand (221) aus erstreckt und eine Füllkomponente (206) trägt.

13. Temperatur-Messvorichtung nach einem der Ansprüche 6 bis 12, **dadurch gekennzeichnet, dass** es des Weiteren eine Füllkomponente (206) umfasst, die zum Einfüllen in die Kammer (223) eingerichtet ist.

14. Temperatur-Messvorichtung nach Anspruch 13, **dadurch gekennzeichnet, dass** die Füllkomponente (206) eine ausgehärtete Struktur aus lichtempfindlichem Gel oder eine ausgehärtete Struktur aus Silizium ist.

## Revendications

1. Ensemble conducteur de chaleur (101, 101b) pour transférer la chaleur d'un objet à mesurer à un composant de mesure de température (200), dans lequel l'ensemble conducteur de chaleur (101, 101b) comprend :
un substrat thermoconducteur (10) ayant une surface supérieure (10a) et une surface inférieure (10b), où la surface inférieure (10b) du substrat thermoconducteur (10) est adaptée pour entrer en contact avec l'objet à mesurer, où le substrat thermoconducteur (10) est configuré pour être électriquement isolant, et
une couche électroconductrice (30) disposée de manière fixe sur la surface supérieure (10a) du substrat thermoconducteur (10) ; et
la couche électroconductrice (30) comprend une paire de parties de connexion de support (32, 32b) qui sont disposées de manière espacée l'une de l'autre et une paire de parties de connexion de sortie (34, 34b), où l'une des parties de connexion de support (32) et l'une des parties de connexion de sortie (34) sont connectées l'une à l'autre, et où l'autre partie de connexion de support (32b) et l'autre partie de connexion de sortie (34b) sont connectées l'une à l'autre ;
chacune des parties de connexion de support (32, 32b) est adaptée pour supporter le composant de mesure de température (200) et pour être électriquement connectée au composant de mesure de température (200) et en contact thermoconducteur avec celui-ci ; et
les parties de connexion de sortie (34, 34b) sont adaptées pour être électriquement connectées à une paire correspondante de connecteurs (204, 204b) configurés pour délivrer en sortie un signal détecté par le composant de mesure de température (200), **caractérisé en ce que** la surface supérieure (10a) du substrat thermoconducteur (10) a un évidement ; et une partie de la couche électroconductrice (30) est introduite dans l'évidement.

2. Ensemble conducteur de chaleur (101, 101b) de la revendication 1, **caractérisé en ce que** le substrat thermoconducteur (10) est une plaque de céramique.

3. Ensemble conducteur de chaleur (101, 101b) de la revendication 1, **caractérisé en ce que** la couche électroconductrice (30) comprend au moins une structure parmi une structure déposée par dépôt physique en phase vapeur, une structure métallique sérigraphiée et une structure solidifiée en suspension métallique.

4. Ensemble conducteur de chaleur (101, 101b) de l'une quelconque des revendications 1 à 3, **caractérisé en ce qu'il** comprend en outre une couche de connexion métallique (50) disposée sur la couche électroconductrice (30) ; et la couche électroconductrice (30) et la couche de connexion métallique (50) sont réalisées à partir de matériaux métalliques différents.

5. Ensemble conducteur de chaleur (101, 101b) de la revendication 4, **caractérisé en ce que** la couche de connexion métallique (50) a une résistivité inférieure à celle de la couche électroconductrice (30).

6. Dispositif de mesure de température (301, 301b), **caractérisé en ce qu'il** comprend l'ensemble conducteur de chaleur (101, 101b) de l'une des revendications 1 à 5 et un composant de mesure de température (200) disposé sur la surface supérieure (10a) du substrat thermoconducteur (10) et électriquement connecté aux parties de connexion de support (32, 32b).

7. Dispositif de mesure de température (301, 301b) de la revendication 6, **caractérisé en ce que** le composant de mesure de température (200) est disposé pour être en contact thermoconducteur avec l'ensemble conducteur de chaleur (101, 101b).

8. Dispositif de mesure de température (301, 301b) de la revendication 6, **caractérisé en ce qu'il** comprend en outre une paire de connecteurs (204, 204b), et une extrémité (241, 241b) de chacun des connecteurs (204, 204b) est adaptée pour être en connexion électrique de contact avec la partie de connexion de sortie correspondante (34, 34b) et pour délivrer en sortie un signal détecté par le composant de mesure de température (200).

9. Dispositif de mesure de température (301, 301b) de la revendication 6, **caractérisé en ce qu'il** comprend en outre un logement de retenue (202) ayant une paroi de chambre (221) ; la paroi de chambre (221) conjointement avec le substrat thermoconducteur (10) renferme une chambre (223) adaptée pour loger un composant de remplissage (206) ; et au moins une partie du composant de mesure de température (200) est disposée à l'intérieur de la chambre (223).

10. Dispositif de mesure de température (301, 301b) de la revendication 9, **caractérisé en ce qu'une** surface interne de la paroi de chambre (221) est munie d'une rainure de limitation (225) ; et une partie du substrat thermoconducteur (10) est contenue dans la rainure de limitation (225).

11. Dispositif de mesure de température (301, 301b) de la revendication 9, **caractérisé en ce que**
le logement de retenue (202) est pourvu de trous traversants de guidage (229, 229b) ;
les trous traversants de guidage (229, 229b) sont disposés de manière à s'étendre à travers la paroi de chambre (221) et pour être en communication avec la chambre (223) ; et
le dispositif de mesure de température (301, 301b) comprend en outre une paire de connecteurs (204, 204b), **caractérisé en ce que**
une extrémité (241, 241b) de chacun des connecteurs (204, 204b) est adaptée pour passer à travers les trous traversants de guidage (229, 229b) et pour être en connexion électrique de contact avec la partie de connexion de sortie correspondante (34, 34b) ; et
une autre extrémité (241b, 241) du connecteur (204, 204b) est adaptée pour délivrer en sortie un signal détecté par le composant de mesure de température (200).

12. Dispositif de mesure de température (301, 301b) de la revendication 9, **caractérisé en ce que** le logement de retenue (202) comprend en outre un bras de renforcement (227, 227b, 227c, 227d) ; et le bras de renforcement (227, 227b, 227c, 227d) est disposé de manière à s'étendre depuis la surface interne de la paroi de chambre (221) pour supporter un composant de remplissage (206).

13. Dispositif de mesure de température de l'une quelconque des revendications 6 à 12, **caractérisé en ce qu'il** comprend en outre un composant de remplissage (206) adapté pour être introduit dans la chambre (223).

14. Dispositif de mesure de température de la revendication 13, **caractérisé en ce que** le composant de remplissage (206) est une structure durcie en gel photosensible ou une structure durcie en silicone.
